# EUROPEAN PATENT SPECIFICATION

(11) **EP 3 960 449 B1**
(45) Date of publication and mention of the grant of the patent: **16.07.2025**
(21) Application number: 20796090.7
(22) Date of filing: 07.04.2020
(51) Int. Cl.: C09D 5/00, C08G 18/28, C08G 18/79, C08G 18/80, C09D 175/04, C09K 3/18, C08F 220/54, C09D 133/06, C08G 18/62, C09D 133/26

(54) **ANTIFOGGING AGENT COMPOSITION, AND ANTIFOGGING ARTICLE HAVING ANTIFOGGING FILM FORMED FROM SAID COMPOSITION**
BESCHLAGSCHUTZMITTELZUSAMMENSETZUNG UND BESCHLAGSCHUTZARTIKEL MIT AUS BESAGTER ZUSAMMENSETZUNG GEBILDETEM BESCHLAGSCHUTZFILM
COMPOSITION D'AGENT ANTIBUÉE ET ARTICLE ANTIBUÉE AYANT UN FILM ANTIBUÉE FORMÉ À PARTIR DE LADITE COMPOSITION

(30) Priority: 25.04.2019 JP 2019083635
(43) Date of publication of application: 02.03.2022
(73) Proprietor: NOF Corporation, Shibuya-ku Tokyo 150-6019 (JP)
(72) Inventor: HASHIMOTO,Kazuki, Chita-gun, Aichi 470-2373 (JP); KANO,Takamitsu, Chita-gun, Aichi 470-2373 (JP)
(74) Representative: Hoffmann Eitle
(86) International application number: PCT/JP2020/015640
(87) International publication number: WO 2020/217969

(56) References cited:
- EP-A1- 1 862 514
- EP-A1- 3 199 607
- WO-A1-2016/047430
- JP-A- 2016 060 878
- JP-A- 2016 169 287
- JP-A- 2019 006 881
- JP-A- 2019 006 881
- JP-A- 2019 156 969
- JP-A- H06 212 146

## Description

### TECHNICAL FIELD

The present invention relates to an antifogging agent composition and an antifogging article having an antifogging film formed from the composition.

### BACKGROUND ART

When a highly-humid air enters a light chamber in a vehicle lighting device such as an automobile headlamp and a lens is cooled by outside air or rainfall, there is a case where fogging occurs due to condensation of moisture on the inner surface thereof. This reduces the brightness of the vehicle lamp and impairs the appearance of a lens surface, which causes the problem of user dissatisfaction. In order to prevent such fogging of a lens, there is known a method in which an antifogging agent is applied onto an area (on the inside of the lens) where fogging may occur to form an antifogging film (dry coating or cured coating).

For example, Patent Document 1 discloses an antifogging agent composition containing a specific copolymer, a polyfunctional blocked isocyanate compound, an anionic surfactant, and a cationic surfactant. Patent Document 2 discloses an antifogging agent composition containing a specific copolymer, a polyfunctional blocked isocyanate compound, an anionic surfactant, and a betaine-based surfactant. Patent Document 3 discloses an antifogging agent composition containing a specific copolymer, a polyfunctional blocked isocyanate compound, a fluorine-based anionic surfactant, and a betaine-based surfactant.

Patent Document 4 discloses an antifogging agent containing a fluorine-based betaine surfactant or fluorine-based anionic surfactant and a fluorine-based nonionic surfactant.

Patent Document 5 describes in Example 4 an antifogging agent composition which inter alia contains a copolymer obtained from a monomer mixture containing N,N-dimethylacrylamide, methyl methacrylate, butyl acrylate, 2-hydroxyethyl acrylate and N-methylolacrylamide. The composition further contains anionic surfactants, i.e. 4 wt% of a sulfosuccinic acid diester salt, "RAPISOL A80" and 1 wt% of a fluorine-containing sulfonate, "FTERGENT 100", as well as cationic surfactants, i.e. 0.5 wt% of a monoalkyl quaternary ammonium salt, "NISSAN CATION BB", and 0.5 wt% of a fluorine-containing cationic surfactant, "FTERGENT 300".

### PRIOR ART DOCUMENTS

### PATENT DOCUMENTS

Patent Document 1: WO2016/047430
Patent Document 2: JP-A-2016-169287
Patent Document 3: JP-A-2016-169288
Patent Document 4: JP-A-2016-60878
Patent Document 5: JP 2019-006881 A

### SUMMARY OF THE INVENTION

### PROBLEMS TO BE SOLVED BY THE INVENTION

On the other hand, it is known that when water drippings generated by formation of a water film due to the contact of moisture with an antifogging film are dried, a surfactant dissolved in water is deposited and water drip stains are left, which causes a poor appearance of a vehicle lighting device. The antifogging agents disclosed in Patent Documents 1 to 3 mentioned above use an anionic surfactant and a cationic surfactant in combination or use an anionic surfactant and a betaine-based surfactant in combination, and therefore exhibit excellent antifogging performance and have the effect of preventing the water drip stains because the two different surfactants form an ion pair so that discharge of the surfactants caused by moisture can be reduced.

However, in the case of antifogging films disclosed in Patent Documents 1 to 3 mentioned above, there is a fear that thick water drip stains generated under specific conditions such as heavy condensation are less likely to disappear even in a highly-humid environment.

Further, the antifogging agent disclosed in Patent Document 4 mentioned above does not contain a resin component that holds the surfactants, and therefore has a problem that when once water drippings are generated, the surfactants are all discharged so that antifogging properties are lost.

Under such circumstances, it is an object of the present invention to provide an antifogging agent composition that has excellent antifogging performance, makes it hard to generate water drip stains, and allows generated water drip stains to become thinner with time in a highly-humid environment, and an antifogging article having an antifogging film formed from the composition.

### MEANS FOR SOLVING THE PROBLEMS

Specifically, the present invention relates to an antifogging agent composition containing a copolymer (A), a polyfunctional blocked isocyanate compound (B), and a surfactant (C), wherein
the copolymer (A) is a (meth)acrylate copolymer obtained from a monomer mixture containing at least one monomer (A-1) selected from the group consisting of a monomer represented by the following general formula (1) and a monomer represented by the following general formula (2), a monomer (A-2) represented by the following general formula (3), and at least one monomer (A-3) selected from the group consisting of a monomer represented by the following general formula (4) and a monomer represented by the following general formula (5): 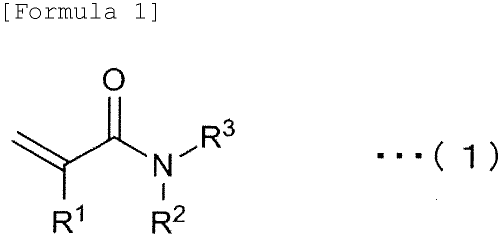 wherein R¹ is a hydrogen atom or a methyl group, R² is a linear or branched alkyl group having 1 to 4 carbon atoms, -C(CH₃)₂CH₂COCH₃, -C₂H₄N(CH₃)₂, or -C₃H₆N(CH₃)₂, and R³ is a hydrogen atom or a linear or branched alkyl group having 1 to 4 carbon atoms; 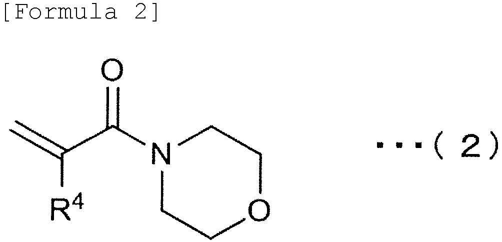 wherein R⁴ is a hydrogen atom or a methyl group; 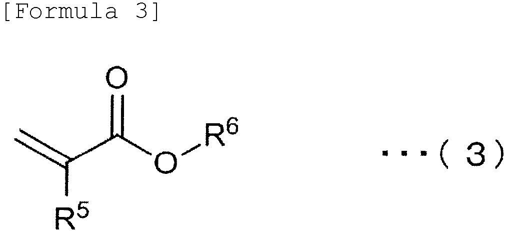 wherein R⁵ is a hydrogen atom or a methyl group and R⁶ is a linear, branched, or cyclic hydrocarbon group having 1 to 16 carbon atoms; 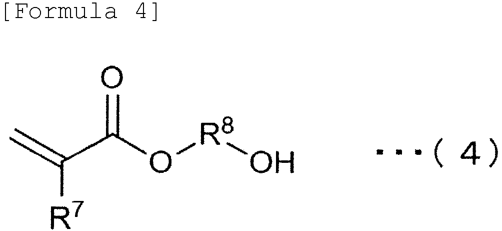 wherein R⁷ is a hydrogen atom or a methyl group and R⁸ is a linear or branched alkylene group having 2 to 4 carbon atoms or -C₂H₄(OCO(CH₂)₅)ₙ- wherein n is 1 to 5; and 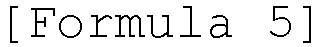 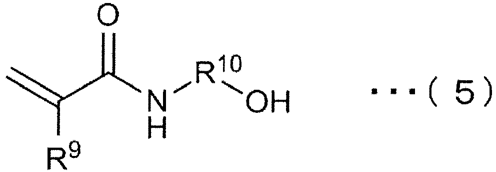 wherein R⁹ is a hydrogen atom or a methyl group and R¹⁰ is a linear or branched alkylene group having 1 to 4 carbon atoms, wherein
the surfactant (C) contains an anionic surfactant (C-1), a surfactant (C-2) having a quaternary ammonium salt structure, and a fluorine-based nonionic surfactant (C-3), and wherein
per 100 parts by mass of the copolymer (A), an amount of the anionic surfactant (C-1) is 1 part by mass or more and 10 parts by mass or less, an amount of the surfactant (C-2) having a quaternary ammonium salt structure is 0.01 parts by mass or more and 3 parts by mass or less, and an amount of the fluorine-based nonionic surfactant (C-3) is 0.05 parts by mass or more and 5 parts by mass or less, and
a mass ratio of the fluorine-based nonionic surfactant (C-3) to a total amount of the anionic surfactant (C-1) and the surfactant (C-2) having a quaternary ammonium salt structure {(C-3)/[(C-1)+(C-2)]} is 0.005 or more and 2.5 or less.

The present invention also relates to an antifogging article including a base material and an antifogging film formed on the base material from the antifogging agent composition.

### EFFECT OF THE INVENTION

The details of action mechanism of the effect of the antifogging agent composition, the antifogging film, and the antifogging article according to the present invention are not completely known, but are estimated as follows. It is to be noted that the present invention should not be interpreted based on only this action mechanism.

The antifogging agent composition according to the present invention contains a specific copolymer (A), a polyfunctional blocked isocyanate compound (B), and, as a surfactant (C), the above-described anionic surfactant (C-1), surfactant (C-2) having a quaternary ammonium salt structure, and fluorine-based nonionic surfactant (C-3). An ion pair formed by the combined use of the anionic surfactant (C-1) and the surfactant (C-2) having a quaternary ammonium salt structure is lower in water solubility than the anionic surfactant (C-1) or the surfactant (C-2) having a quaternary ammonium salt structure. Therefore, an antifogging film containing, as a surfactant, only the anionic surfactant (C-1) and the surfactant (C-2) having a quaternary ammonium salt structure does not absorb moisture even when exposed to a highly-humid environment, which does not allow water drip stains to become thinner. On the other hand, when a certain amount of the fluorine-based nonionic surfactant (C-3) is blended with these surfactants, the fluorine-based nonionic surfactant (C-3) improves the surface activating ability of the ion pair so that the moisture absorbency of water drip stains is improved. Therefore, the water drip stains become thinner with time in a highly-humid environment because the water drip stains are gradually influenced by moisture. Therefore, an antifogging film obtained from the antifogging agent composition according to the present invention has excellent antifogging performance, makes it hard to generate water drip stains, and allows generated water drip stains to become thinner with time in a highly-humid environment.

### MODE FOR CARRYING OUT THE INVENTION

The antifogging agent composition according to the present invention contains a copolymer (A), a polyfunctional blocked isocyanate compound (B), and a surfactant (C).

### <Copolymer (A)>

The copolymer (A) used in the present invention is a (meth)acrylate copolymer obtained from a monomer mixture containing at least the following monomers (A-1) to (A-3).

### <Monomer (A-1)>

The monomer (A-1) is at least one selected from the group consisting of a monomer represented by the following general formula (1) and a monomer represented by the following general formula (2): 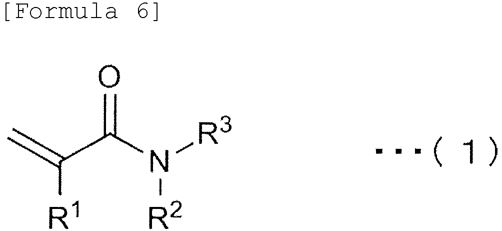 (wherein R¹ is a hydrogen atom or a methyl group, R² is a linear or branched alkyl group having 1 to 4 carbon atoms, -C(CH₃)₂CH₂COCH₃, -C₂H₄N(CH₃)₂, or -C₃H₆N(CH₃)₂, and R³ is a hydrogen atom or a linear or branched alkyl group having 1 to 4 carbon atoms); and 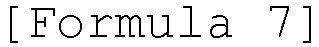 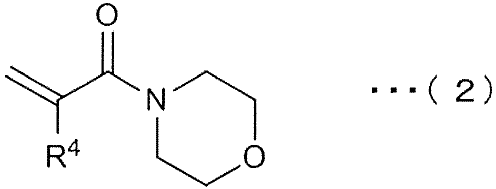 (wherein R⁴ is a hydrogen atom or a methyl group).

Examples of the linear or branched alkyl group having 1 to 4 carbon atoms in the general formula (1) include a methyl group, an ethyl group, an n-propyl group, an i-propyl group, an n-butyl group, an i-butyl group, and a t-butyl group. In the general formula (1), from the viewpoint of improving the antifogging performance of an antifogging film and the adhesiveness of the antifogging film to a base material, R¹ is preferably a hydrogen atom and R² and R³ are preferably each independently a linear or branched alkyl group having 1 to 4 carbon atoms, more preferably a methyl group or an ethyl group, even more preferably a methyl group. Further, in the general formula (2), from the viewpoint of improving the antifogging performance of an antifogging film, R⁴ is preferably a hydrogen atom. As the monomer (A-1), at least one monomer (A-1) is used, and two or more monomers (A-1) may be used in combination.

### <Monomer (A-2)>

The monomer (A-2) is a monomer represented by the following general formula (3): 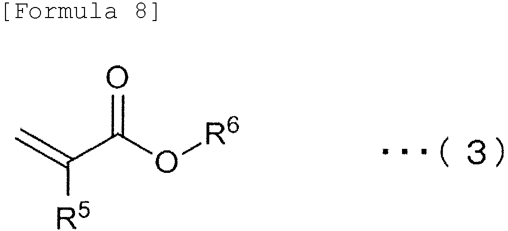 (wherein R⁵ is a hydrogen atom or a methyl group and R⁶ is a linear, branched, or cyclic hydrocarbon group having 1 to 16 carbon atoms).

Examples of the linear, branched, or cyclic hydrocarbon group having 1 to 16 carbon atoms in the general formula (3) include: alkyl groups such as a methyl group, an ethyl group, an n-propyl group, an i-propyl group, an n-butyl group, an i-butyl group, a t-butyl group, an n-amyl group, an i-amyl group, a t-amyl group, an n-hexyl group, a cyclohexyl group, an n-octyl group, a 2-ethylhexyl group, an n-nonyl group, an isobornyl group, a lauryl group, a myristyl group, a cetyl group, a stearyl group, and a behenyl group; alkenyl groups such as an oleyl group; and aryl groups such as a phenyl group. From the viewpoint of enhancing the adhesiveness of an antifogging film to a base material and water resistance and enhancing the antifogging properties of the antifogging film, the number of carbon atoms is preferably 1 to 8. As the monomer (A-2), at least one monomer (A-2) is used, and two or more monomers (A-2) may be used in combination.

### <Monomer (A-3)>

The monomer (A-3) is at least one selected from the group consisting of a monomer represented by the following general formula (4) and a monomer represented by the following general formula (5): 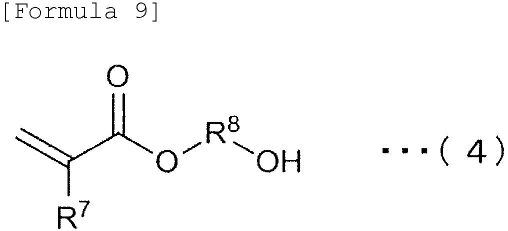 (wherein R⁷ is a hydrogen atom or a methyl group and R⁸ is a linear or branched alkylene group having 2 to 4 carbon atoms or -C₂H₄(OCO(CH₂)₅)ₙ- wherein n is 1 to 5); and 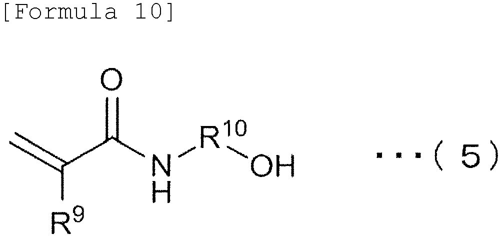 (wherein R⁹ is a hydrogen atom or a methyl group and R¹⁰ is a linear or branched alkylene group having 1 to 4 carbon atoms) .

Examples of the linear or branched alkylene group having 2 to 4 carbon atoms in the general formula (4) include an ethylene group, a propylene group, a 2-methylmethylene group, a butylene group, a 2-methylpropylene group, a 3-methylpropylene group, a 2,2-dimethylmethylene group, and a 2-ethylmethylene group. From the viewpoint of enhancing the water resistance and antifogging durability of an antifogging film, R⁸ is preferably a linear alkylene group having 2 to 4 carbon atoms, more preferably an ethylene group, a propylene group, or a 2-methylmethylene group, even more preferably an ethylene group or a propylene group.

Examples of the linear or branched alkylene group having 1 to 4 carbon atoms in the general formula (5) include a methylene group, an ethylene group, a propylene group, a 2-methylmethylene group, a butylene group, a 2-methylpropylene group, a 3-methylpropylene group, a 2,2-dimethylmethylene group, and a 2-ethylmethylene group. From the viewpoint of enhancing the water resistance and antifogging durability of an antifogging film, R¹⁰ is preferably a linear alkylene group having 2 to 4 carbon atoms, more preferably a methylene group, an ethylene group, or a propylene group, even more preferably a methylene group or an ethylene group.

As the monomer (A-3), at least one monomer (A-3) is used, and two or more monomers (A-3) may be used in combination.

Hereinbelow, the ratio of each of the monomer components in the monomer mixture for forming the copolymer (A) used in the present invention will be described.

The amount of the monomer (A-1) is preferably 35 parts by mass or more and 90 parts by mass or less per 100 parts by mass of the total of the monomer (A-1), the monomer (A-2), and the monomer (A-3). From the viewpoint of improving antifogging properties, the amount of the monomer (A-1) is preferably 40 parts by mass or more, more preferably 45 parts by mass or more per 100 parts by mass of the total of the monomer (A-1), the monomer (A-2), and the monomer (A-3), and from the viewpoint of water resistance and preventing water drip stains, the amount of the monomer (A-1) is preferably 80 parts by mass or less, more preferably 70 parts by mass or less per 100 parts by mass of the total of the monomer (A-1), the monomer (A-2), and the monomer (A-3).

The amount of the monomer (A-2) is preferably 5 parts by mass or more and 60 parts by mass or less per 100 parts by mass of the total of the monomer (A-1), the monomer (A-2), and the monomer (A-3). From the viewpoint of improving water resistance and adhesiveness and preventing water drip stains, the amount of the monomer (A-2) is preferably 15 parts by mass or more, more preferably 25 parts by mass or more per 100 parts by mass of the total of the monomer (A-1), the monomer (A-2), and the monomer (A-3), and from the viewpoint of maintaining antifogging properties, the amount of the monomer (A-2) is preferably 50 parts by mass or less, more preferably 40 parts by mass or less per 100 parts by mass of the total of the monomer (A-1), the monomer (A-2), and the monomer (A-3).

The amount of the monomer (A-3) is preferably 5 parts by mass or more and 30 parts by mass or less per 100 parts by mass of the total of the monomer (A-1), the monomer (A-2), and the monomer (A-3). From the viewpoint of improving water resistance and preventing water drip stains, the amount of the monomer (A-3) is preferably 8 parts by mass or more, more preferably 10 parts by mass or more per 100 parts by mass of the total of the monomer (A-1), the monomer (A-2), and the monomer (A-3), and from the viewpoint of improving adhesiveness, the amount of the monomer (A-3) is preferably 25 parts by mass or less, more preferably 20 parts by mass or less per 100 parts by mass of the total of the monomer (A-1), the monomer (A-2), and the monomer (A-3).

The total content of the monomers (A-1) to (A-3) in the monomer mixture is preferably 85% by mass or more, more preferably 90% by mass or more, even more preferably 95% by mass or more.

It is to be noted that the monomer mixture may contain a monomer other than the monomers (A-1) to (A-3), and examples of such a monomer to be used include: aromatic vinyl-based monomers such as styrene, vinyl toluene, and α-methylstyrene; vinyl-based monomers having a quaternary ammonium salt structure, such as (meth)acryloyloxyethyl trimethylammonium chloride and (meth)acryloylaminopropyl trimethylammonium chloride; alicyclic acrylic monomers such as phenoxyethyl (meth)acrylate, tetrahydrofurfuryl (meth)acrylate, and isobornyl (meth)acrylate; carboxyl group-containing monomers such as (meth)acrylic acid, itaconic acid, crotonic acid, and maleic acid, and ammonium salts, organic amine salts, and alkali metal salts thereof; sulfonic acid group-containing vinyl-based monomers such as styrenesulfonic acid, vinyl sulfonic acid, methallylsulfonic acid, 2-(meth)acrylamido-2-methylpropanesulfonic acid, and 3-sulfopropyl (meth)acrylate, and ammonium salts, organic amine salts, and alkali metal salts thereof; phosphoric acid group-containing vinyl-based monomers such as 2-(meth)acryloyloxyethyl acid phosphate and ammonium salts, organic amine salts, and alkali metal salts thereof; bifunctional (meth)acrylates such as 1,6-hexanediol di(meth)acrylate, 1,9-nonanediol (meth)acrylate, 1,10-decanediol di(meth)acrylate, neopentyl glycol di(meth)acrylate, glycerin di(meth)acrylate, and N,N'-methylenebis[(meth)acrylamide]; polyfunctional vinyl-based monomers such as trimethylolpropane tri(meth)acrylate, pentaerythritol tri(meth)acrylate, and pentaerythritol tetra(meth)acrylate; alkoxysilyl group-containing vinyl-based monomers such as γ-(meth)acryloxypropyl trimethoxysilane, γ-(meth)acryloxypropyl triethoxysilane, and vinyltrimethoxysilane; and epoxy group-containing vinyl-based monomers such as glycidyl (meth)acrylate, vinyl glycidyl ether, and allyl glycidyl ether.

### <Method for producing copolymer (A)>

The copolymer (A) used in the present invention is obtained by copolymerizing the monomer mixture. The copolymer may have any structure such as a random copolymer, an alternating copolymer, a block copolymer, or a graft copolymer, but from the viewpoint that the effect of the antifogging agent composition, such as antifogging properties, can be improved and the antifogging agent composition can easily be prepared, the copolymer is preferably a random copolymer. Examples of a polymerization method used for obtaining the copolymer include various publicly-known polymerization methods such as radical polymerization, cationic polymerization, anionic living polymerization, and cationic living polymerization, but in terms of ease of industrial production and a wide variety of performance properties, radical polymerization is particularly preferred. As radical polymerization, conventional bulk polymerization, suspension polymerization, solution polymerization, or emulsion polymerization may be employed, but from the viewpoint that an obtained product can directly be used as an antifogging agent composition after polymerization, solution polymerization is preferred.

Examples of a polymerization solvent for use in the solution polymerization include: alcohol-based solvents such as methanol, ethanol, n-propanol, isopropanol, **n-**butanol, isobutanol, s-butanol, t-butanol, and diacetone alcohol; alcohol ether-based solvents such as ethylene glycol monomethyl ether, ethylene glycol monoethyl ether, propylene glycol monomethyl ether, propylene glycol monoethyl ether, 3-methoxy-1-butanol, and 3-methoxy-3-methyl-1-butanol; ketone-based solvents such as acetone, methyl ethyl ketone, methyl isobutyl ketone, and cyclohexanone; ether-based solvents such as tetrahydrofuran and dioxane; ester-based solvents such as methyl acetate, ethyl acetate, n-butyl acetate, isobutyl acetate, t-butyl acetate, methyl lactate, and ethyl lactate; aromatic solvents such as benzene, toluene, and xylene; amide-based solvents such as formamide and dimethylformamide; and water. These polymerization solvents may be used singly or in combination of two or more of them.

As the radical polymerization initiator, a radical polymerization initiator generally used, such as an organic peroxide or an azo compound, may be used. Examples of the organic peroxide include benzoyl peroxide, 3,5,5-trimethylhexanoyl peroxide, t-butyl peroxy-2-hexanoatelate, t-butyl peroxy pivalate, and t-hexyl peroxy pivalate. Examples of the azo compound include 2,2'-azobisisobutyronitrile and 2,2'-azobis-2-methylbutyronitrile. These radical polymerization initiators may be used singly or in combination of two or more of them.

The amount of the radical polymerization initiator to be added is preferably 0.01 to 5 parts by mass per 100 parts by mass of the monomer mixture. The radical polymerization initiator is preferably added dropwise into a reaction container during polymerization in terms of ease of control of heat generated by polymerization. The temperature at which a polymerization reaction is performed is appropriately changed depending on the type of radical polymerization initiator to be used, but is preferably 30 to 150°C, more preferably 40 to 100°C in terms of industrial production.

The weight-average molecular weight (Mw) of the copolymer (A) is preferably 20,000 or more, more preferably 30,000 or more from the viewpoint of imparting water resistance to an antifogging film. The weight-average molecular weight (Mw) of the copolymer (A) is preferably 120,000 or less, more preferably 110,000 or less from the viewpoint of enhancing the applicability and handleability of the antifogging agent composition.

The weight-average molecular weight (Mw) of the copolymer (A) can be determined by GPC. The weight-average molecular weight (Mw) of the copolymer (A) can be measured under the following conditions using, as a sample, a 0.2 mass% dimethylformamide solution of the copolymer (A) filtered through a 0.5 µm membrane filter.

### <Measurement of weight-average molecular weight (Mw)>

Analyzer: HLC-8320GPC (manufactured by Tosoh Corporation)
Columns: serial connection of KD-802.5 (manufactured by Showa Denko K.K.), KD-803 (manufactured by Showa Denko K.K.), and KD-80M (manufactured by Showa Denko K.K.)
Column size: 8.0 × 300 mm
Eluant: dimethylformamide
Flow rate: 1.0 mL/min
Detector: differential refractometer
Column temperature: 40°C
Reference sample: polystyrene

### <Polyfunctional blocked isocyanate compound (B)>

The polyfunctional blocked isocyanate compound (B) used in the present invention is obtained by blocking isocyanate groups of a compound having two or more isocyanate groups in one molecule with a blocking agent. The polyfunctional blocked isocyanate compound (B) is not particularly limited as long as it is at least subjected to a cross-linking reaction with the copolymer (A) to form a cured film. As the polyfunctional blocked isocyanate compound (B), at least one polyfunctional blocked isocyanate compound is used, and two or more polyfunctional blocked isocyanate compounds may be used in combination.

Examples of the compound having two or more isocyanate groups in one molecule which is used for obtaining the polyfunctional blocked isocyanate compound (B) include: diisocyanate group-containing compounds such as tolylene diisocyanate, xylylene diisocyanate, diphenylmethane diisocyanate, tetramethylxylidene diisocyanate, isophorone diisocyanate, hexamethylene diisocyanate, lysine diisocyanate, trimethylhexane diisocyanate, 4,4'-methylenebis(cyclohexylisocyanate), 1,3-(isocyanatomethyl)cyclohexane, and 1,5-naphthalene diisocyanate; and derivatives, such as biurets, isocyanurates, adducts, and allophanates, of these diisocyanate group-containing compounds. Among them, from the viewpoint of preventing yellowing, isophorone diisocyanate, hexamethylene diisocyanate, trimethyl hexanediisocyanate, 4,4'-methylenebis(cyclohexylisocyanate), 1,3-(isocyanatomethyl)cyclohexane, and derivatives thereof are preferred.

Examples of the blocking agent include compounds such as diethyl malonate, 3,5-dimethyl pyrazole, ε-caprolactam, phenol, methyl ethyl ketoxime, and alcohol. Among them, from the viewpoint of excellent low-temperature curability, diethyl malonate is preferred.

As the polyfunctional blocked isocyanate compound (B), from the viewpoint of low-temperature curability and low yellowing tendency, an isocyanurate or biuret of hexamethylene diisocyanate blocked with diethyl malonate is preferably used.

The copolymer (A) and the polyfunctional blocked isocyanate compound (B) are preferably used in a ratio such that the equivalent ratio between isocyanate groups of the polyfunctional blocked isocyanate compound (B) and hydroxyl groups of the copolymer (A) (NCO/OH) is 0.1 or more and 1.5 or less, and the equivalent ratio is preferably 0.2 or more, preferably 0.3 or more from the viewpoint of improving the water resistance of an antifogging film to improve water resistance and moisture resistance, and is preferably 1.2 or less from the viewpoint of improving antifogging properties and adhesiveness.

From the viewpoint of promoting the cross-linking reaction, a catalyst may be used. Examples of the catalyst include: metallic organic compounds such as tin octylate, dibutyltin di(2-ethylhexanoate), dioctyltin di(2-ethylhexanoate), dioctyltin diacetate, dibutyltin dilaurate, dibutyltin fatty acid salts; and tertiary amines such as tetramethylbutanediamine, 1,4-diazabicyclo[2,2,2]octane, 1,8-diazabicyclo[5,4,0]undecene-7, and 1,5-diazabicyclo[4,3,0]nonene-5.

### <Surfactant (C)>

The surfactant (C) used in the present invention contains an anionic surfactant (C-1), a surfactant (C-2) having a quaternary ammonium salt structure, and a fluorine-based nonionic surfactant (C-3).

As the anionic surfactant (C-1), any conventionally-known anionic surfactant can be used, and examples thereof include: fatty acid salts such as sodium oleate and potassium oleate; higher alcohol sulfuric acid esters such as sodium lauryl sulfate and ammonium lauryl sulfate; alkyl benzene sulfonic acid salts and alkyl naphthalene sulfonic acid salts such as sodium dodecylbenzenesulfonate and sodium alkylnaphthalenesulfonate; and naphthalenesulfonic acid dialkyl phosphate salts, a malin condensation product, dialkylsulfosuccinic acid salts, dialkylphosphate salts, and polyoxyethylene sulfate salts such as sodium polyoxyethylene alkyl phenyl ethers. Other examples of the anionic surfactant (C-1) include fluorine-based anionic surfactants such as perfluoroalkyl carboxylic acid salts, perfluoroalkenylcarboxylic acid salts, perfluoroalkylsulfonic acid salts, perfluoroalkenylsulfonic acid salts, perfluoroalkylphosphoric acid esters, and perfluoroalkenylphosphoric acid esters. From the viewpoint of achieving excellent antifogging performance and antifogging durability and making it hard to visually recognize water drip stains, the anionic surfactant (C-1) is preferably a fluorine-based anionic surfactant. As the anionic surfactant (C-1), at least one anionic surfactant is used, and two or more anionic surfactants may be used in combination.

The surfactant (C-2) having a quaternary ammonium salt structure is a compound having at least one quaternary ammonium group in its molecule. For example, any conventionally-known cationic surfactant or betaine-based surfactant can be used. As the surfactant (C-2) having a quaternary ammonium salt structure, at least one surfactant having a quaternary ammonium salt structure is used, and two or more surfactants having a quaternary ammonium salt structure may be used in combination.

Examples of the cationic surfactant include: amine salts such as ethanol amines, lauryl amine acetate, triethanolamine monoformic acid salt, and stearamidoethyldiethylamine acetic acid salt; alkyltrimethylammonium salts such as lauryltrimethylammonium chloride and stearyltrimethylammonium chloride; dialkyldimethylammonium salts such as dilauryldimethylammonium chloride, distearyldimethylammonium chloride, lauryldimethylbenzylammonium chloride, and stearyldimethylbenzylammonium chloride; and fluorine-based cationic surfactants such as perfluoroalkyltrimethylammonium salts and perfluoroalkenyltrimethylammonium salts.

Examples of the betaine-based surfactant include: fatty acid-type betaine-based surfactants such as dimethylalkyllaurylbetaine and dimethylalkylstearylbetaine; sulfonic acid-type betaine-based surfactants such as dimethyl alkyl sulfobetaine; alkylglycines; and fluorine-containing betaine-based surfactants such as perfluoroalkylbetaines and perfluoroalkenylbetaines.

As the fluorine-based nonionic surfactant (C-3), any conventionally-known fluorine-based nonionic surfactant can be used, and examples thereof include perfluoroalkylamineoxides, perfluoroalkenylamineoxides, perfluoroalkylethyleneoxide adducts, perfluoroalkenylethyleneoxide adducts, oligomers having a perfluoroalkyl group and a hydrophilic group, oligomers having a perfluoroalkenyl group and a hydrophilic group, oligomers having a perfluoroalkyl group and a lipophilic group, oligomers having a perfluoroalkenyl group and a lipophilic group, oligomers having a perfluoroalkyl group, a hydrophilic group, and a lipophilic group, and oligomers having a perfluoroalkenyl group, a hydrophilic group, and a lipophilic group. From the viewpoint of improving antifogging durability, making water drip stains less visible, and allowing water drip stains to disappear in a highly-humid environment, the fluorine-based nonionic surfactant (C-3) is preferably a fluorine-based nonionic surfactant having two or more perfluoroalkenyl groups in its molecule. As the fluorine-based nonionic surfactant (C-3), at least one fluorine-based nonionic surfactant is used, and two or more fluorine-based nonionic surfactants may be used in combination.

The amount of the anionic surfactant (C-1) is 1.0 part by mass or more and 10.0 parts by mass or less per 100 parts by mass of the copolymer (A). From the viewpoint of improving antifogging properties and heat resistance, the amount of the anionic surfactant (C-1) is more preferably 2.0 parts by mass or more, even more preferably 2.5 parts by mass or more per 100 parts by mass of the copolymer (A), and from the viewpoint of preventing water drip stains, the amount of the anionic surfactant (C-1) is more preferably 8.0 parts by mass or less, even more preferably 7.0 parts by mass or less per 100 parts by mass of the copolymer (A).

The amount of the surfactant (C-2) having a quaternary ammonium salt structure is 0.01 parts by mass or more and 3 parts by mass or less per 100 parts by mass of the copolymer (A). From the viewpoint of improving antifogging properties, the surfactant (C-2) having a quaternary ammonium salt structure is more preferably 0.02 parts by mass or more, even more preferably 0.10 parts by mass or more per 100 parts by mass of the copolymer (A), and from the viewpoint of preventing water drip stains, the amount of the surfactant (C-2) having a quaternary ammonium salt structure is more preferably 2.5 parts by mass or less, even more preferably 1.5 parts by mass or less per 100 parts by mass of the copolymer (A).

The amount of the fluorine-based nonionic surfactant (C-3) is 0.05 parts by mass or more and 5 parts by mass or less per 100 parts by mass of the copolymer (A). From the viewpoint of improving antifogging durability, making water drip stains less visible, and allowing water drip stains to disappear in a highly-humid environment, the amount of the fluorine-based nonionic surfactant (C-3) is more preferably 0.10 parts by mass or more per 100 parts by mass of the copolymer (A), and from the viewpoint of heat resistance, adhesiveness, and water drip stains, the amount of the fluorine-based nonionic surfactant (C-3) is more preferably 3 parts by mass or less, even more preferably 1 part by mass or less per 100 parts by mass of the copolymer (A).

From the viewpoint of antifogging durability, the mass ratio of the surfactant (C-2) having a quaternary ammonium salt structure to the anionic surfactant (C-1) ((C-2)/(C-1)) is preferably 0.01 or more, more preferably 0.03 or more, and from the viewpoint of making it easy for water drip stains to disappear with time in a highly-humid environment, the mass ratio of the surfactant (C-2) having a quaternary ammonium salt structure to the anionic surfactant (C-1) ((C-2)/(C-1)) is preferably 0.8 or less, more preferably 0.3 or less.

The ratio of the mass of the fluorine-based nonionic surfactant (C-3) to the total mass of the anionic surfactant (C-1) and the surfactant (C-2) having a quaternary ammonium salt structure {(C-3)/[(C-1)+(C-2)]} is 0.005 or more and 2.5 or less. From the viewpoint of making it easy for water drip stains to disappear with time in a highly-humid environment, the ratio of the mass of the fluorine-based nonionic surfactant (C-3) to the total mass of the anionic surfactant (C-1) and the surfactant (C-2) having a quaternary ammonium salt structure {(C-3)/[(C-1)+(C-2)]} is preferably 0.02 or more.

The use of a non-fluorine-based nonionic surfactant (C-3') in combination with the fluorine-based nonionic surfactant (C-3) improves the effect of thinning water drip stains in a highly-humid environment. As the non-fluorine-based nonionic surfactant (C-3'), any conventionally-known non-fluorine-based nonionic surfactant can be used, and examples thereof include: polyoxyethylene higher alcohol ethers such as polyoxyethylene lauryl ether and polyoxyethylene oleyl ether; polyoxyethylene alkyl aryl ethers such as polyoxyethylene octyl phenol and polyoxyethylene nonyl phenol; polyoxyethylene acyl esters such as polyoxyethylene glycol monostearate; polypropylene glycol ethylene oxide adducts, and polyoxyethylene sorbitan fatty acid esters such as polyoxyethylene sorbitan monolaurate and polyoxyethylene sorbitan monostearate; phosphoric acid esters such as alkylphosphoric acid esters and polyoxyethylene alkyl ether phosphoric acid esters; and sugar esters and cellulose esters. From the viewpoint of heat resistance and water drip stains, the amount of the non-fluorine-based nonionic surfactant (C-3') to be added is preferably smaller than the amount of the fluorine-based nonionic surfactant (C-3). For example, the amount of the non-fluorine-based nonionic surfactant (C-3') is preferably 3.0 parts by mass or less, more preferably 1.0 part by mass or less, even more preferably 0.5 parts by mass or less per 100 parts by mass of the copolymer (A).

### <Colloidal silica (D)>

The antifogging agent composition according to the present invention may contain colloidal silica (D) from the viewpoint of further improving the effect of thinning water drip stains in a highly-humid environment. The colloidal silica (D) refers to silica fine particles dispersed in a dispersion medium, and publicly-known colloidal silica can be used. From the viewpoint of the transparency of a cured film, the particle diameter of the colloidal silica (D) is preferably 100 nm or less, more preferably 50 nm or less, even more preferably 30 nm or less, and from the viewpoint of adhesiveness, the particle diameter is preferably 10 nm or more. It is to be noted that the particle diameter is a cumulant average particle diameter measured by dynamic light scattering. As the colloidal silica (D), one kind of colloidal silica may be used or two or more kinds of colloidal silica may be used in combination.

Examples of the dispersion medium include: water; alcohol-based solvents such as methanol, ethanol, isopropanol, n-propanol, isobutanol, and n-butanol; polyhydric alcohol-based solvents such as ethylene glycol; polyhydric alcohol derivatives such as ethylene glycol monoethyl ether, ethylene glycol monobutyl ether, and ethylene glycol monopropyl ether; ketone-based solvents such as methyl ethyl ketone, methyl isobutyl ketone, and diacetone alcohol; amide-based solvents such as dimethyl acetamide; ester-based solvents such as ethyl acetate; and aromatic hydrocarbon-based solvents such as toluene.

Examples of a commercially-available product of the colloidal silica (D) include water-dispersed colloidal silica sol (product names: SNOWTEX 30, SNOWTEX O, SNOWTEX OS, SNOWTEX C, SNOWTEX N, etc.), methanol-dispersed colloidal silica (product name: Methanol Silica Sol), i-propanol-dispersed colloidal silica (product name: IPA-ST), ethylene glycol-dispersed colloidal silica (product name: EG-ST), ethylene glycol mono-n-propyl ether-dispersed colloidal silica (product name: NPC-ST-30), propylene glycol monomethyl ether-dispersed colloidal silica (product name: PGM-ST), dimethylacetamide-dispersed colloidal silica (product name: DMAC-ST), methyl ethyl ketone-dispersed colloidal silica (product name: MEK-ST-40), methyl isobutyl ketone-dispersed colloidal silica (product name: MIBK-ST), ethyl acetate-dispersed colloidal silica (product name: EAC-ST), propylene glycol monomethyl ether acetate-dispersed colloidal silica (product name: PMA-ST), and toluene-dispersed colloidal silica (product name: TOL-ST) (all of which are manufactured by Nissan Chemical Corporation). The colloidal silica (D) is preferably one dispersed in water or a hydrophilic solvent so as not to impair antifogging properties.

When the colloidal silica (D) is used, the amount of the colloidal silica (D) is preferably 120 parts by mass or less per 100 parts by mass of the copolymer (A). From the viewpoint of preventing water drip stains, the amount of the colloidal silica (D) is more preferably 5 parts by mass or more, even more preferably 10 parts by mass or more per 100 parts by mass of the copolymer (A), and from the viewpoint of antifogging properties, the amount of the colloidal silica (D) is preferably 100 parts by mass or less, more preferably 50 parts by mass or less per 100 parts by mass of the copolymer (A).

The antifogging agent composition according to the present invention may further contain a diluting solvent.

The diluting solvent is used for the purpose of adjusting the solid content and viscosity of the antifogging agent composition so that they are suitable for application. As the diluting solvent, a polymerization solvent for the copolymer (A) is preferably used. The solid content and viscosity suitable for application vary depending on the type of application method used, but in the case of spray coating, the amount of the copolymer (A) contained in the antifogging agent composition is preferably 3% by mass or more and 30% by mass or less, more preferably 5% by mass or more and 20% by mass or less.

If necessary, the antifogging agent composition according to the present invention may contain, as other components, conventional various additives such as a leveling agent, a curing catalyst, an antioxidant, a UV absorber, and a light stabilizer. Each of the additives as other components may be added in a conventional amount, but the amount of each of the additives to be added is usually 10 parts by mass or less per 100 parts by mass of the copolymer (A).

### <Antifogging article>

An antifogging article according to the present invention is obtained by applying the antifogging agent composition described above onto an object to be coated by an application method used for a conventional coating material and curing the antifogging agent composition by heating so that an antifogging film is formed on the surface of the object to be coated.

As the object to be coated, any type of publicly-known resin base material can be used, and examples thereof include polymethyl methacrylate resins, polycarbonate resins, polystyrene resins, acrylonitrile-styrene copolymer resins, vinyl polychloride resins, acetate resins, ABS resins, polyester resins, and polyamide resins.

When the antifogging agent composition is applied onto the object to be coated, foreign matter adhered to the surface of the object to be coated is preferably removed before application for the purpose of enhancing the wettability of the antifogging agent composition on the object to be coated to prevent repellence. The removal of foreign matter is performed by, for example, dust removal by high-pressure air or ionized air, ultrasonic cleaning using an aqueous detergent solution or an alcohol solvent, wiping using an alcohol solvent, or cleaning with UV light or ozone. Examples of the application method include dipping, flow coating, roll coating, bar coating, and spray coating.

The thickness of the antifogging film is preferably 0.5 to 10 µm, more preferably 1 to 5 µm from the viewpoint of achieving excellent antifogging properties and excellent appearance of coating.

The intended use of the antifogging article is not particularly limited, but the antifogging article may be used for, for example, the vehicle lighting device of an automobile. Examples of the vehicle lighting device include headlights, auxiliary headlights, road lights, number-plate lights, taillights, parking lights, reverse lights, directional lights, auxiliary directional lights, and hazard flashers.

### EXAMPLES

Hereinbelow, the present invention will be described in more detail with reference to Examples, but the present invention is not limited only to these Examples.

### <Production of copolymer (A)>

### <Production of copolymer (A-I)>

First, 300 parts by mass of diacetone alcohol as a polymerization solvent was charged into a reaction container equipped with a thermometer, a stirring device, a nitrogen introduction tube, and a cooling tube, and was heated to 80°C while nitrogen gas was blown thereinto. Then, a solution obtained by mixing 45 parts by mass of N,N-dimethylacrylamide as a monomer (A-1), 35 parts by mass of n-butyl acrylate as a monomer (A-2), 20 parts by mass of 2-hydroxyethyl acrylamide as a monomer (A-3), and 1.0 part by mass of t-hexyl peroxypivalate as a radical polymerization initiator (manufactured by NOF CORPORATION under the trade name of "PERHEXYL PV" (active ingredient: 70% by mass)) was added dropwise to the reaction container for 2 hours. After the completion of dropwise addition, the solution was further stirred for 1 hour while maintained at 80°C, and was then cooled to produce a solution of a copolymer (A-I). The polymerization conversion rate of the monomers charged for the copolymer (A-I) was measured by gas chromatography and was found to be 100%. Further, the weight-average molecular weight of the copolymer (A-I) was measured by gel permeation chromatography and was found to be 91,000. The solution of the copolymer (A-I) had a solid content of 25.2% by mass. It is to be noted that the hydroxyl number (theoretical value) of the copolymer (A-I) is 97.5 mgKOH/g.

### <Production of copolymer (A-II)>

First, 300 parts by mass of diacetone alcohol as a polymerization solvent was charged into a reaction container equipped with a thermometer, a stirring device, a nitrogen introduction tube, and a cooling tube, and was heated to 80°C while nitrogen gas was blown thereinto. Then, a solution obtained by mixing 50 parts by mass of N,N-dimethylacrylamide as a monomer (A-1), 35 parts by mass of cyclohexyl acrylate as a monomer (A-2), 15 parts by mass of 2-hydroxyethyl acrylate as a monomer (A-3), and 1.0 part by mass of t-hexyl peroxypivalate as a radical polymerization initiator (manufactured by NOF CORPORATION under the trade name of "PERHEXYL PV" (active ingredient: 70% by mass)) was added dropwise to the reaction container for 2 hours. After the completion of dropwise addition, the solution was further stirred for 1 hour while maintained at 80°C, and was then cooled to produce a solution of a copolymer (A). The polymerization conversion rate of the monomers charged for the copolymer (A-II) was measured by gas chromatography and was found to be 100%. Further, the weight-average molecular weight of the copolymer (A-II) was measured by gel permeation chromatography and was found to be 80,000. The solution of the copolymer (A-II) had a solid content of 24.9% by mass. It is to be noted that the hydroxyl number (theoretical value) of the copolymer (A-II) is 72.5 mgKOH/g.

### <Example 1>

### <Production of antifogging agent composition>

First, 600 parts by mass of propylene glycol monomethyl ether was added to 400 parts by mass of the solution obtained above containing 100 parts by mass of the copolymer (A-I) as the copolymer (A) to adjust the concentration of a diluted solution of the copolymer (A-I) to 10.0% by mass. Then, the diluted solution of the copolymer (A-I) was mixed with 89.9 parts by mass of an isocyanurate of hexamethylene diisocyanate blocked with diethyl malonate (manufactured by Asahi Kasei Corp. under the trade name of "DURANATE MF-K60B") as a polyfunctional blocked isocyanate compound (B), di(2-ethylhexyl) sodium sulfosuccinate (manufactured by NOF CORPORATION under the trade name of "RAPISOL A80", active ingredient; 80% by mass) as an anionic surfactant (C-1) in an amount equal to 5.0 parts by mass, 0.50 parts by mass of tetra-n-butyl ammonium bromide (manufactured by Tokyo Chemical Industry Co., Ltd.) as a surfactant (C-2) having a quaternary ammonium salt structure, 0.40 parts by mass of perfluoroalkenyl polyoxyethylene (manufactured by NEOS COMPANY LIMITED under the trade name of "FTERGENT 215M") as a fluorine-based nonionic surfactant (C-3), and 0.05 parts by mass of polyether-modified polydimethylsiloxane (manufactured by BYK-Chemie under the trade name of "BYK333") as a leveling agent to produce an antifogging agent composition.

### <Production of antifogging article>

The antifogging agent composition obtained above was applied by spray coating onto a polycarbonate (PC) plate in an atmosphere of 25°C and 30%RH so that a coating film after curing had a thickness of 2 to 4 µm and cured by heating at 120°C for 30 minutes to produce an antifogging article (test specimen) having an antifogging film.

The test specimen obtained above was evaluated by the following evaluation methods (1) to (6), and the results are shown in Table 1.

### <Evaluation of antifogging properties>

### <(1) Steam test>

The test specimen was placed at a height of 2 cm from the water surface of a hot-water bath maintained at 80°C with the coating film side down, steam from the hot-water bath was continuously applied onto the coating film for 10 seconds, and the presence or absence of fogging was evaluated by visual observation according to the following four criteria. It is to be noted that there is no problem in practical use when the evaluation result is C or higher.
A: No fogging was observed.
B: Fogging was observed for a moment, but quickly disappeared due to the formation of a water film.
C: Fogging was clearly observed, but disappeared after 10 seconds due to the formation of a water film.
D: A non-uniform water film was observed on part or entire of the coating film after 10 seconds from the application of steam.

### <(2) Durability test>

The test specimen was placed at a height of 2 cm from the water surface of a hot-water bath maintained at 80°C with the coating film side down, steam from the hot-water bath was continuously applied onto the coating film for 10 seconds, and the test specimen was then set up vertically and dried at room temperature for 5 to 10 minutes. This was repeated 30 times, and then the coating film was evaluated in the same manner as in <(1) Steam test>. It is to be noted that there is no problem in practical use when the evaluation result is C or higher.

### <(3) Steam test after heat resistance test>

The test specimen was left to stand in a drier set at 120°C for 10 days, and was then left to stand at room temperature for 24 hours. Then, the coating film was evaluated in the same manner as in <(1) Steam test>. It is to be noted that there is no problem in practical use when the evaluation result is C or higher.

### <(4) Water drip stains>

The test specimen was placed at a height of 2 cm from the water surface of a hot-water bath maintained at 80°C with the coating film side down, steam from the hot-water bath was continuously applied onto the coating film for 10 seconds, and the test specimen was set up vertically to generate water drippings and left to stand horizontally and dried at room temperature. After drying, the presence or absence of water drip stains was evaluated by visual observation according to the following four criteria. It is to be noted that there is no problem in practical use when the evaluation result is C or higher.
A: Water drip stains were not conspicuous.
B: Water drip stains were hardly conspicuous.
C: Water drip stains were slightly conspicuous.
D: water drip stains were thick.

### <(5) Temporal change of water drip stains in highly-humid environment>

Water drip stains were generated in the same manner as in <(4) Water drip stains> and then evaluated by visual observation after the test specimen was left to stand in a thermo-hygrostat set at 20°C and 75%RH or 30°C and 75%RH for 10 days. The evaluation was made according to the following four criteria. It is to be noted that there is no problem in practical use when the evaluation result is C or higher.
A: Water drip stains disappeared.
B: Water drip stains were much thinner than those before the test.
C: Water drip stains were thinner than those before the test.
D: Water drip stains were not changed from those before the test.

### <(6) Adhesiveness>

The presence or absence of peeling-off of the coating film was visually observed in accordance with JIS K 5400 8.5.1 and evaluated according to the following three criteria. It is to be noted that there is no problem in practical use when the evaluation result is B or higher.
A: Peeling-off was not observed at all.
B: The coating film was partially peeled off.
C: The coating film was entirely peeled off.

### <Examples 2 to 23 and Comparative Examples 1 to 7>

### <Production of antifogging agent compositions and production of antifogging articles>

In each of Examples 2 to 23 and Comparative Examples 1 to 7, an antifogging agent composition was produced in the same manner as in Example 1 except that the raw materials of Example 1 and their ratios were changed as shown in Tables 1 to 3. Further, antifogging articles (test specimens) having antifogging films of Examples 2 to 23 and Comparative Examples 1 to 7, respectively, were produced in the same manner as in Example 1.

The test specimens obtained above were evaluated by the above-described evaluation methods (1) to (6), and the results are shown in Tables 1 to 3.

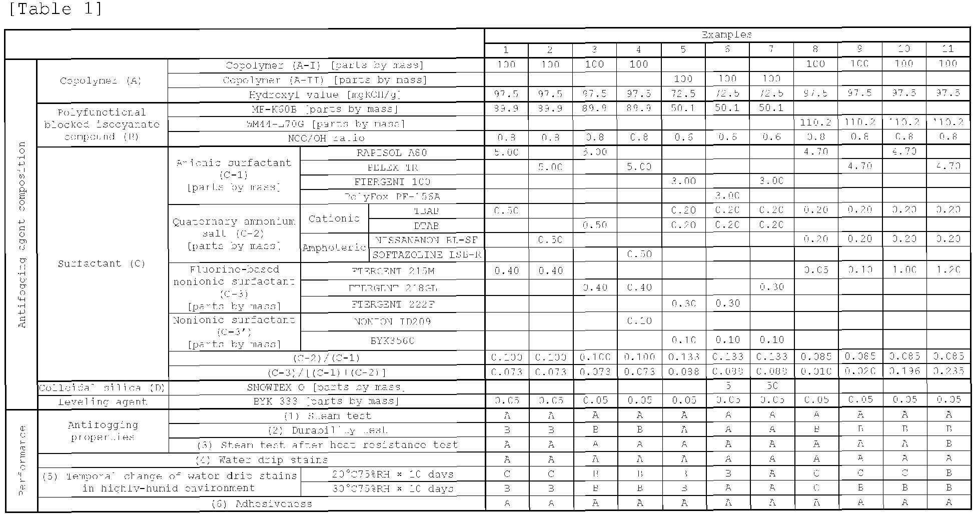

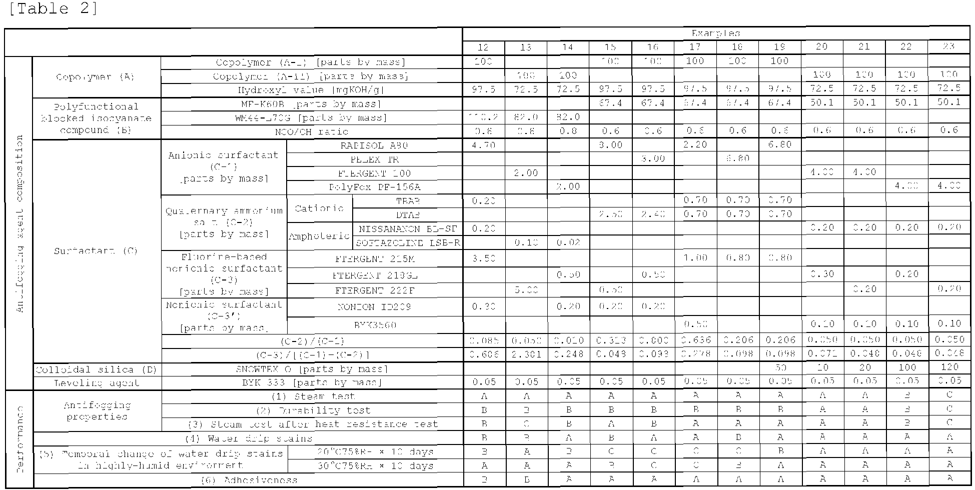

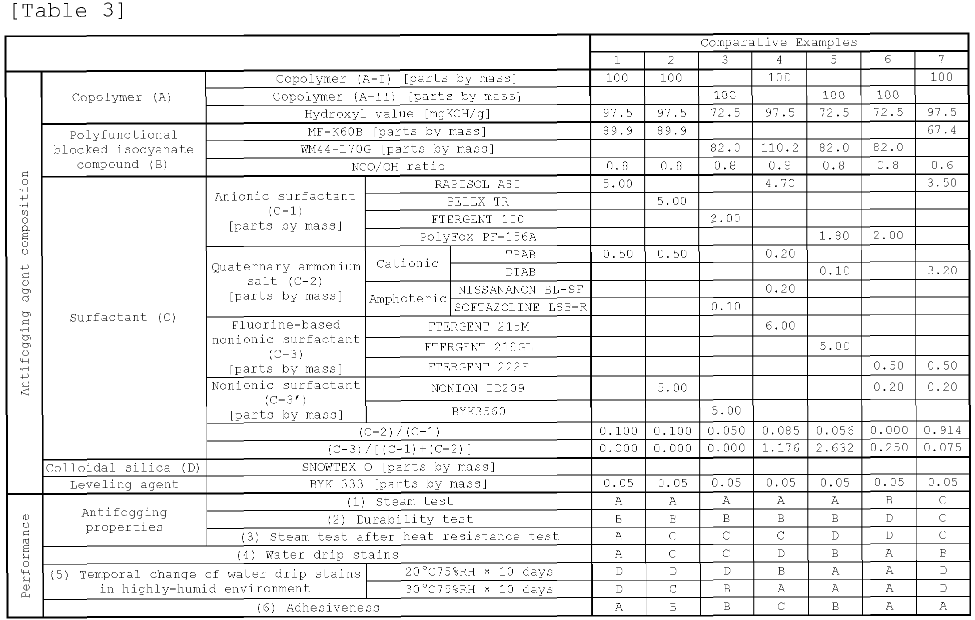

Polyfunctional blocked isocyanate compounds (B) shown in Tables 1 to 3 are as follows:
DURANATE MF-K60B is an isocyanurate of hexamethylene diisocyanate blocked with malonic diester (manufactured by Asahi Kasei Corp., active ingredient: 60% by mass, NCO amount: 6.5% by mass); and
DURANATE WM44-L70G is an isocyanurate of hexamethylene diisocyanate blocked with malonic diester (manufactured by Asahi Kasei Corp., active ingredient: 70% by mass, NCO amount: 5.3% by mass).

Surfactants (C) shown in Table 1 to 3 are as follows:
RAPISOL A80 is di(2-ethylhexyl) sodium sulfosuccinate (manufactured by NOF CORPORATION, active ingredient: 80% by mass) ;
PELEX TR is ditridecyl sodium sulfosuccinate (manufactured by Kao Corporation, active ingredient: 70% by mass) ;
FTERGENT 100 is a perfluoroalkenylsulfonic acid salt (manufactured by NEOS COMPANY LIMITED, active ingredient: 100% by mass);
PolyFox PF-156A is perfluoroalkyl polyoxyethylene diammonium disulfonate (manufactured by OMNOVA SOLUTIONS, active ingredient: 30% by mass);
TBAB is tetra-n-butylammonium bromide (manufactured by Tokyo Chemical Industry Co., Ltd, active ingredient: 100% by mass);
DTAB is dodecyltrimethyl ammonium bromide (manufactured by Tokyo Chemical Industry Co., Ltd., active ingredient: 100% by mass);
NISSANANON BL-SF is lauryldimethylaminoacetic acid betaine (manufactured by NOF CORPORATION, active ingredient: 33.5 to 37.5% by mass);
SOFTAZOLINE LSB-R is lauramidopropylhydroxysultaine (manufactured by Kawaken Fine Chemicals Co., Ltd., active ingredient: 29% by mass);
FTERGENT 215M is perfluoroalkenyl polyoxyethylene (manufactured by NEOS COMPANY LIMITED, active ingredient: 100% by mass, one perfluoroalkenyl group per molecule);
FTERGENT 218GL is perfluoroalkenyl polyoxyethylene (manufactured by NEOS COMPANY LIMITED, active ingredient: 100% by mass, three perfluoroalkenyl groups per molecule);
FTERGENT 222F is perfluoroalkenyl polyoxyethylene (manufactured by NEOS COMPANY LIMITED, active ingredient 100% by mass, two perfluoroalkenyl groups per molecule);
NONION ID209 is polyoxyethylene isodecyl ether (manufactured by NOF CORPORATION, active ingredient: 100% by mass); and
BYK3560 is polyether macromer-modified acrylate (manufactured by BYK-Chemie, active ingredient: 100% by mass).

SNOWTEX O shown as colloidal silica (D) in Tables 1 to 3 is water-dispersed colloidal silica sol (manufactured by Nissan Chemical Corporation, active ingredient: 20% by mass, particle diameter: 12 nm).

BYK333 shown as a leveling agent in Tables 1 to 3 is polyether-modified polydimethylsiloxane (manufactured by BYK-Chemie, active ingredient: 100% by mass).

## Claims

1. An antifogging agent composition containing a copolymer (A), a polyfunctional blocked isocyanate compound (B), an anionic surfactant (C-1), a surfactant (C-2) having a quaternary ammonium salt structure, and a fluorine-based nonionic surfactant (C-3), wherein
the copolymer (A) is a (meth)acrylate copolymer obtained from a monomer mixture containing at least one monomer (A-1) selected from the group consisting of a monomer represented by a following general formula (1) and a monomer represented by a following general formula (2), a monomer (A-2) represented by a following general formula (3), and at least one monomer (A-3) selected from the group consisting of a monomer represented by a following general formula (4) and a monomer represented by a following general formula (5): 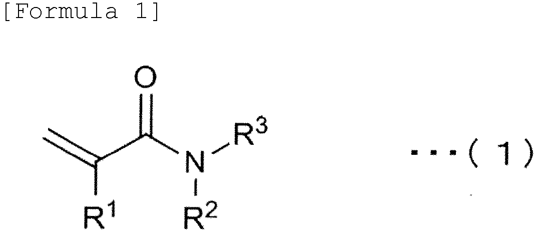 wherein R¹ is a hydrogen atom or a methyl group, R² is a linear or branched alkyl group having 1 to 4 carbon atoms, -C (CH₃),CH,COCH₃, -C₂H₄N(CH₃)₂, or -C₃H₆N(CH₃)₂, and R³ is a hydrogen atom or a linear or branched alkyl group having 1 to 4 carbon atoms; 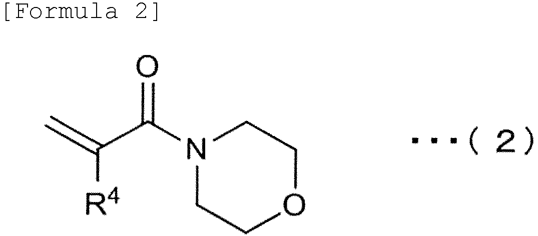 wherein R⁴ is a hydrogen atom or a methyl group; 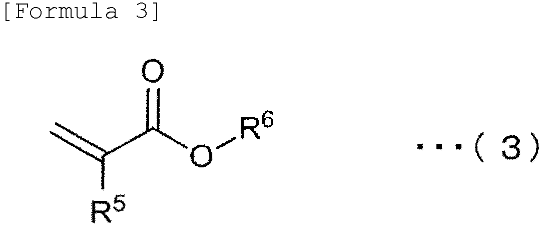 wherein R⁵ is a hydrogen atom or a methyl group and R⁶ is a linear, branched, or cyclic hydrocarbon group having 1 to 16 carbon atoms; 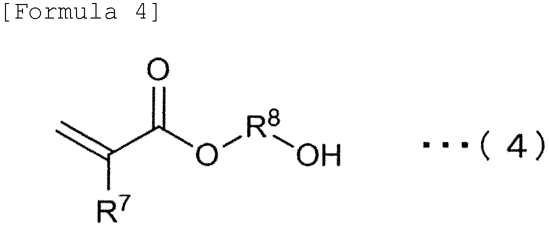 wherein R⁷ is a hydrogen atom or a methyl group and R⁸ is a linear or branched alkylene group having 2 to 4 carbon atoms or -C₂H₄(OCO(CH₂)₅)ₙ- wherein n is 1 to 5; and 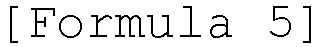 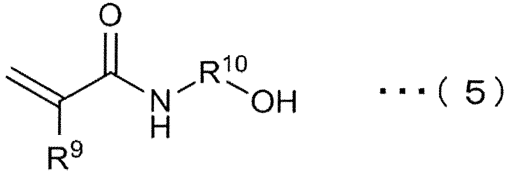 wherein R⁹ is a hydrogen atom or a methyl group and R¹⁰ is a linear or branched alkylene group having 1 to 4 carbon atoms, and wherein,
per 100 parts by mass of the copolymer (A), an amount of the anionic surfactant (C-1) is 1 part by mass or more and 10 parts by mass or less, an amount of the surfactant (C-2) having a quaternary ammonium salt structure is 0.01 parts by mass or more and 3 parts by mass or less, and an amount of the fluorine-based nonionic surfactant (C-3) is 0.05 parts by mass or more and 5 parts by mass or less, and
a mass ratio of the fluorine-based nonionic surfactant (C-3) to a total mass of the anionic surfactant (C-1) and the surfactant (C-2) having a quaternary ammonium salt structure {(C-3)/[(C-1)+(C-2)]} is 0.005 or more and 2.5 or less.

2. The antifogging agent composition according to claim 1, wherein a mass ratio of the surfactant (C-2) having a quaternary ammonium salt structure to the anionic surfactant (C-1) ((C-2)/(C-1)) is 0.01 or more and 0.8 or less.

3. The antifogging agent composition according to claim 1 or 2, wherein the anionic surfactant (C-1) is a fluorine-based anionic surfactant.

4. The antifogging agent composition according to any one of claims 1 to 3, wherein when a total amount of the monomer (A-1), the monomer (A-2), and the monomer (A-3) is taken as 100 parts by mass, an amount of the monomer (A-1) is 35 parts by mass or more and 90 parts by mass or less, an amount of the monomer (A-2) is 5 parts by mass or more and 60 parts by mass or less, and an amount of the monomer (A-3) is 5 parts by mass or more and 30 parts by mass or less.

5. The antifogging agent composition according to any one of claims 1 to 4, wherein the copolymer (A) and the polyfunctional blocked isocyanate compound (B) are used in a ratio such that an equivalent ratio between isocyanate groups of the polyfunctional blocked isocyanate compound (B) and hydroxyl groups of the copolymer (A) (NCO/OH) is 0.1 or more and 1.5 or less.

6. The antifogging agent composition according to any one of claims 1 to 5, containing colloidal silica (D).

7. The antifogging agent composition according to claim 6, wherein an amount of the colloidal silica (D) is 120 parts by mass or less per 100 parts by mass of the copolymer (A).

8. An antifogging article comprising a base material and an antifogging film formed on the base material from the antifogging agent composition according to any one of claims 1 to 7.

## Patentansprüche

1. Beschlagschutzmittelzusammensetzung, enthaltend ein Copolymer (A), eine polyfunktionelle blockierte Isocyanatverbindung (B), ein anionisches Tensid (C-1), ein Tensid (C-2) mit einer quaternären Ammoniumsalzstruktur und ein nichtionisches Tensid auf Fluorbasis (C-3), wobei
das Copolymer (A) ein (Meth)acrylat-Copolymer ist, das aus einer Monomermischung erhalten wird, die mindestens ein Monomer (A-1), ausgewählt aus der Gruppe, bestehend aus einem durch eine folgende allgemeine Formel (1) dargestellten Monomer und einem durch eine folgende allgemeine Formel (2) dargestellten Monomer, ein durch eine folgende allgemeine Formel (3) dargestelltes Monomer (A-2) und mindestens ein Monomer (A-3), ausgewählt aus der Gruppe, bestehend aus einem durch eine folgende allgemeine Formel (4) dargestellten Monomer und einem durch eine folgende allgemeine Formel (5) dargestellten Monomer, enthält: 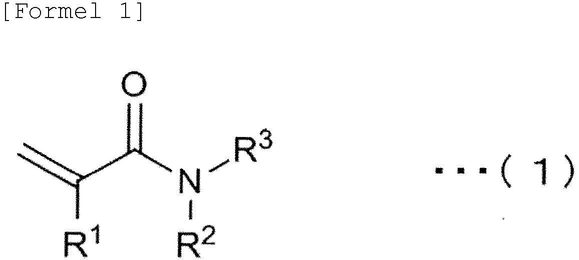
worin R¹ ein Wasserstoffatom oder eine Methylgruppe ist, R² eine lineare oder verzweigte Alkylgruppe mit 1 bis 4 Kohlenstoffatomen, -C(CH₃)₂CH₂COCH₃, -C₂H₄N(CH₃)₂ oder -C₃H₆N(CH₃)₂ ist und R³ ein Wasserstoffatom oder eine lineare oder verzweigte Alkylgruppe mit 1 bis 4 Kohlenstoffatomen ist, 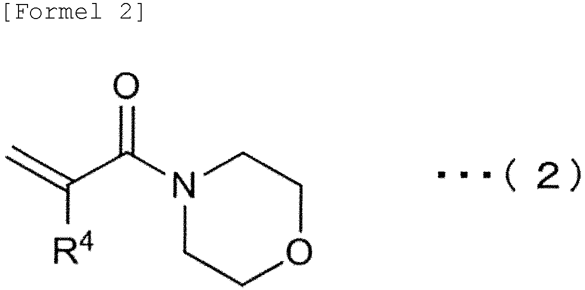
worin R⁴ ein Wasserstoffatom oder eine Methylgruppe ist, 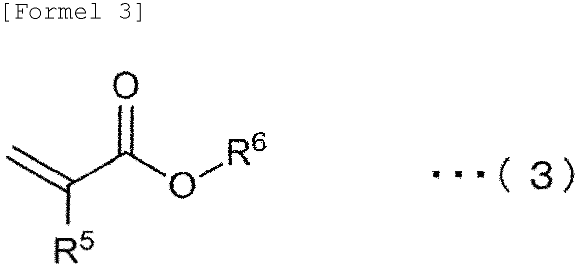
worin R⁵ ein Wasserstoffatom oder eine Methylgruppe ist, und R⁶ eine lineare, verzweigte oder cyclische Kohlenwasserstoffgruppe mit 1 bis 16 Kohlenstoffatomen ist, 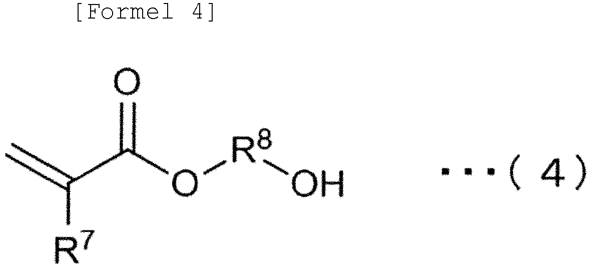
worin R⁷ ein Wasserstoffatom oder eine Methylgruppe ist und R⁸ eine lineare oder verzweigte Alkylengruppe mit 2 bis 4 Kohlenstoffatomen oder -C₂H₄(OCO(CH₂)₅)ₙ- ist, worin n 1 bis 5 ist, und 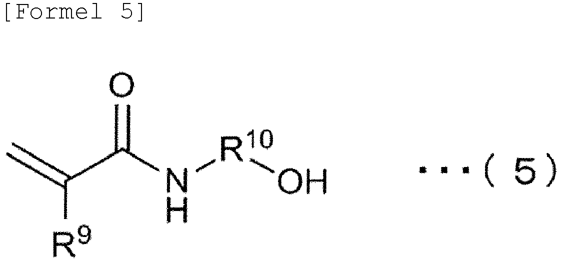
worin R⁹ ein Wasserstoffatom oder eine Methylgruppe ist und R¹⁰ eine lineare oder verzweigte Alkylengruppe mit 1 bis 4 Kohlenstoffatomen ist, und wobei
pro 100 Masseteile des Copolymers (A) eine Menge des anionischen Tensids (C-1) 1 Masseteil oder mehr und 10 Masseteile oder weniger beträgt, eine Menge des Tensids (C-2) mit einer quaternären Ammoniumsalzstruktur 0,01 Masseteile oder mehr und 3 Masseteile oder weniger beträgt und eine Menge des nichtionischen Tensids auf Fluorbasis (C-3) 0,05 Masseteile oder mehr und 5 Masseteile oder weniger beträgt und
ein Massenverhältnis des nichtionischen Tensids auf Fluorbasis (C-3) zu einer Gesamtmasse des anionischen Tensids (C-1) und des Tensids (C-2) mit einer quaternären Ammoniumsalzstruktur {(C-3]/[(C-1)+(C-2)]} 0,005 oder mehr und 2,5 oder weniger beträgt.

2. Beschlagschutzmittelzusammensetzung gemäß Anspruch 1, wobei ein Massenverhältnis des Tensids (C-2) mit einer quaternären Ammoniumsalzstruktur zu dem anionischen Tensid (C-1) ((C-2)/(C-1)) 0,01 oder mehr und 0,8 oder weniger beträgt.

3. Beschlagschutzmittelzusammensetzung gemäß Anspruch 1 oder 2, wobei das anionische Tensid (C-1) ein anionisches Tensid auf Fluorbasis ist.

4. Beschlagschutzmittelzusammensetzung gemäß einem der Ansprüche 1 bis 3, wobei, wenn eine Gesamtmenge des Monomers (A-1), des Monomers (A-2) und des Monomers (A-3) als 100 Masseteile angenommen wird, eine Menge des Monomers (A-1) 35 Masseteile oder mehr und 90 Masse-% oder weniger beträgt, eine Menge des Monomers (A-2) 5 Masseteile oder mehr und 60 Masseteile oder weniger beträgt und eine Menge des Monomers (A-3) 5 Masseteile oder mehr und 30 Masseteile oder weniger beträgt.

5. Beschlagschutzmittelzusammensetzung gemäß einem der Ansprüche 1 bis 4, wobei das Copolymer (A) und die polyfunktionelle blockierte Isocyanatverbindung (B) in einem solchen Verhältnis verwendet werden, dass ein Äquivalentverhältnis zwischen Isocyanatgruppen der polyfunktionellen blockierten Isocyanatverbindung (B) und Hydroxylgruppen des Copolymers (A) (NCO/OH) 0,1 oder mehr und 1,5 oder weniger beträgt.

6. Beschlagschutzmittelzusammensetzung gemäß einem der Ansprüche 1 bis 5, die kolloidales Siliciumdioxid (D) enthält.

7. Beschlagschutzmittelzusammensetzung gemäß Anspruch 6, wobei eine Menge des kolloidalen Silicumdioxids (D) 120 Masseteile oder weniger pro 100 Masseteile des Copolymers (A) beträgt.

8. Beschlagschutzartikel, umfassend ein Basismaterial und einen Beschlagschutzfilm, der auf dem Basismaterial aus der Beschlagschutzmittelzusammensetzung gemäß einem der Anspruch 1 bis 7 gebildet ist.

## Revendications

1. Composition d'agent antibuée contenant un copolymère (A), un composé isocyanate bloqué polyfonctionnel (B), un tensioactif anionique (C-1), un tensioactif (C-2) présentant une structure de sel d'ammonium quaternaire, et un tensioactif non ionique à base de fluor (C-3), dans laquelle
le copolymère (A) est un copolymère de (méth)acrylate obtenu à partir d'un mélange de monomères contenant au moins un monomère (A-1) sélectionné parmi le groupe consistant en un monomère représenté par une formule générale (1) suivante et un monomère représenté par une formule générale (2) suivante, un monomère (A-2) représenté par une formule générale (3) suivante, et au moins un monomère (A-3) sélectionné parmi le groupe consistant en un monomère représenté par une formule générale (4) suivante et un monomère représenté par une formule générale (5) suivante : 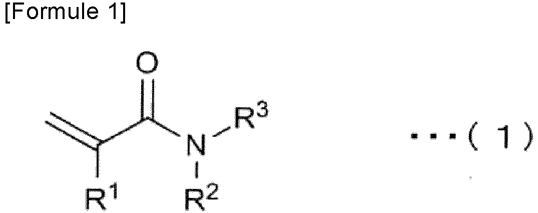 dans laquelle R¹ est un atome d'hydrogène ou un groupe méthyle, R² est un groupe alkyle linéaire ou ramifié comprenant 1 à 4 atomes de carbone, -C(CH₃)₂CH₂COCH₃, -C₂H₄N(CH₃)₂, ou -C₃H₆N(CH₃)₂, et R³ est un atome d'hydrogène ou un groupe alkyle linéaire ou ramifié comprenant 1 à 4 atomes de carbone ; 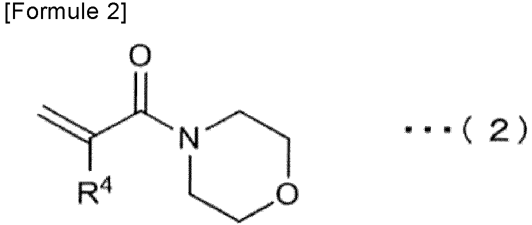 dans laquelle R⁴ est un atome d'hydrogène ou un groupe méthyle ; 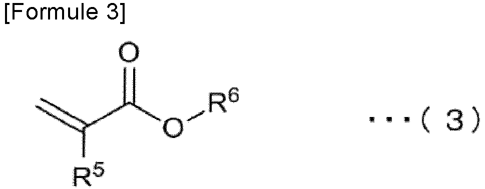 dans laquelle R⁵ est un atome d'hydrogène ou un groupe méthyle et R⁶ est un groupe hydrocarboné linéaire, ramifié, ou cyclique comprenant 1 à 16 atomes de carbone ; 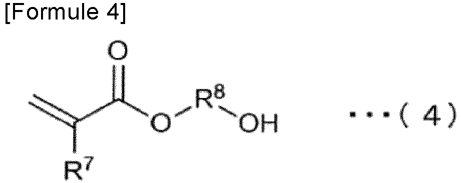 dans laquelle R⁷ est un atome d'hydrogène ou un groupe méthyle et R⁸ est un groupe alkylène linéaire ou ramifié comprenant 2 à 4 atomes de carbone ou -C₂H₄(OCO(CH₂)₅)ₙ- dans laquelle n est 1 à 5 ; et 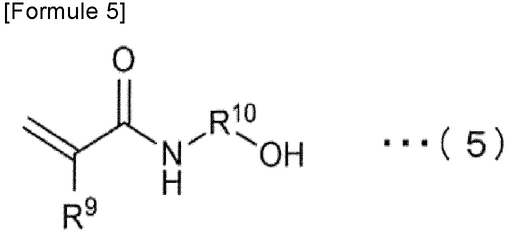 dans laquelle R⁹ est un atome d'hydrogène ou un groupe méthyle et R¹⁰ est un groupe alkylène linéaire ou ramifié comprenant 1 à 4 atomes de carbone, et dans laquelle,
par 100 parties en masse du copolymère (A), une quantité du tensioactif anionique (C-1) est 1 partie en masse ou plus et 10 parties en masse ou moins, une quantité du tensioactif (C-2) présentant une structure de sel d'ammonium quaternaire est 0,01 partie en masse ou plus et 3 parties en masse ou moins, et une quantité du tensioactif non ionique à base de fluor (C-3) est 0,05 partie en masse ou plus et 5 parties en masse ou moins, et
un rapport massique du tensioactif non ionique à base de fluor (C-3) sur une masse totale du tensioactif anionique (C-1) et du tensioactif (C-2) présentant une structure de sel d'ammonium quaternaire { (C-3) / [ (C-1) + (C-2) ] } est 0,005 ou plus et 2,5 ou moins.

2. Composition d'agent antibuée selon la revendication 1, dans laquelle un rapport massique du tensioactif (C-2) présentant une structure de sel d'ammonium quaternaire sur le tensioactif anionique (C-1) ((C-2) / (C-1)) est 0,01 ou plus et 0,8 ou moins.

3. Composition d'agent antibuée selon la revendication 1 ou la revendication 2, dans laquelle le tensioactif anionique (C-1) est un tensioactif anionique à base de fluor.

4. Composition d'agent antibuée selon l'une quelconque des revendications 1 à 3, dans laquelle, lorsqu'une quantité totale du monomère (A-1), du monomère (A-2), et du monomère (A-3) est considérée comme étant 100 parties en masse, une quantité du monomère (A-1) est 35 parties en masse ou plus et 90 parties en masse ou moins, une quantité du monomère (A-2) est 5 parties en masse ou plus et 60 parties en masse ou moins, et une quantité du monomère (A-3) est 5 parties en masse ou plus et 30 parties en masse ou moins.

5. Composition d'agent antibuée selon l'une quelconque des revendications 1 à 4, dans laquelle le copolymère (A) et le composé isocyanate bloqué polyfonctionnel (B) sont utilisés dans un rapport tel qu'un rapport équivalent entre des groupes isocyanate du composé isocyanate bloqué polyfonctionnel (B) et des groupes hydroxyle du copolymère (A) (NCO/OH) soit 0,1 ou plus et 1,5 ou moins.

6. Composition d'agent antibuée selon l'une quelconque des revendications 1 à 5, contenant une silice colloïdale (D).

7. Composition d'agent antibuée selon la revendication 6, dans laquelle une quantité de la silice colloïdale (D) est 120 parties en masse ou moins par 100 parties en masse du copolymère (A).

8. Article antibuée comprenant un matériau de base et un film antibuée formé sur le matériau de base à partir de la composition d'agent antibuée selon l'une quelconque des revendications 1 à 7.
